# EUROPEAN PATENT APPLICATION

(11) **EP 3 598 730 A1**
(43) Date of publication of application: **22.01.2020**
(21) Application number: 18305987.2
(22) Date of filing: 19.07.2018
(51) Int. Cl.: H04N 5/225, H04N 5/33, H04N 17/00, H04N 9/31

(54) **LIGHT FIELD CAPTURING SYSTEM AND CORRESPONDING CALIBRATION DEVICE, METHOD AND COMPUTER PROGRAM PRODUCT**

(71) Applicant: THOMSON LICENSING, 92130 Issy les Moulineaux (FR)
(72) Inventor: BABON, Frédéric, 35576 Cesson-Sévigné (FR); BOISSON, Guillaume, 35576 Cesson-Sévigné (FR); LANGLOIS, Tristan, 35576 Cesson-Sévigné (FR)
(74) Representative: Huchet, Anne

(57) **Abstract**

A light field capturing system is proposed. Such light field capturing system comprises a camera array. A plurality of cameras of the camera array comprise each at least one rotating mirror allowing for deflecting a ray bundle captured by at least one sensor of the camera.

## Description

### 1. FIELD OF THE DISCLOSURE

The present disclosure relates generally to the field of capture of Light Field (LF) image or video.

More specifically, the disclosure relates to a LF capturing system presenting a high flexibility, e.g. in terms of global field of view (FOV).

The disclosure can be of interest in any field where LF capture is used, both for professional and consumers.

### 2. TECHNOLOGICAL BACKGROUND

LF data consist either in:
- **plenoptic video,** also known as lenslet based video, i.e. in a video in which the images belonging to a matrix of images are sub-aperture images that have been captured simultaneously from a single camera using a micro-lens array in addition to the main lenses system, as for instance a plenoptic camera; or
- **multi-view video,** i.e. in a video in which the images belonging to a matrix of images have been captured simultaneously from multiple camera angles, typically using a camera array (also known as camera rig) comprising several cameras.

Camera arrays are more flexible in terms of FOV and angles covering than plenoptic camera. Known camera arrays comprise compact cameras mounted on a metal frame, positioned in a common plane and pointing at the same direction. One known camera array is the Stanford Multi-Camera Array (Bennett Wilburn, Mark A. Horowitz, Pat Hanrahan, Marc Levoy, "The Stanford Multi-Camera Array", Stanford University). However, such array suffers from a lack of flexibility due to its rigid structure.

Consequently, there is a need for a LF capturing system based on a camera array that presents a high flexibility for adapting to various use cases (e.g. narrow or wide global field of view, high or low redundancy between images).

There is also a need for having such LF capturing system to deliver high quality images whatever its configuration, i.e. whatever the use case addressed by the LF capturing system thanks to its flexibility.

### 3. SUMMARY

The present disclosure relates to a LF capturing system comprising a camera array. A plurality of cameras of the camera array comprise each at least one rotating mirror allowing for deflecting a ray bundle captured by at least one sensor of the camera.

Another aspect of the disclosure pertains to a method for calibrating a LF capturing system comprising a camera array. A plurality of cameras of the camera array comprise each at least one rotating mirror allowing for deflecting a ray bundle captured by at least one sensor of the camera. Each camera of the plurality of cameras further comprises a laser source in the near infrared configured for having the camera to radiate a laser ray as part of the ray bundle. The at least one sensor is configured for capturing the ray bundle at least in the near infrared domain. The LF capturing system further comprises at least one hot mirror disposed in front of the plurality of cameras and configured for:
- intercepting the laser rays radiated by the cameras of the plurality of cameras, generating a plurality of corresponding laser spots on the at least one hot mirror; and
- allowing at least one given camera of the plurality of cameras to capture in the near infrared domain at least:
   - a laser spot corresponding to the given camera; and
   - at least another laser spot corresponding to at least another camera of the plurality of cameras.

Such method comprises:
- making at least the given camera capturing a near infrared image comprising at least:
   - the laser spot corresponding to the given camera; and
   - the at least another laser spot corresponding to the at least another camera,
- determining a pose of the given camera, respectively of the at least another camera, based at least on the near infrared image.

Another aspect of the disclosure pertains to a device for calibrating a LF capturing system comprising a camera array. A plurality of cameras of the camera array comprise each at least one rotating mirror allowing for deflecting a ray bundle captured by at least one sensor of the camera. Each camera of the plurality of cameras further comprises a laser source in the near infrared configured for having the camera to radiate a laser ray as part of the ray bundle. The at least one sensor is configured for capturing the ray bundle at least in the near infrared domain. The LF capturing system further comprises at least one hot mirror disposed in front of the plurality of cameras and configured for:
- intercepting the laser rays radiated by the cameras of the plurality of cameras, generating a plurality of corresponding laser spots on the at least one hot mirror; and
- allowing at least one given camera of the plurality of cameras to capture in the near infrared domain at least:
   - a laser spot corresponding to the given camera; and
   - at least another laser spot corresponding to at least another camera of the plurality of cameras.

Such device comprises a reprogrammable or dedicated computation machine configured for:
- making at least the given camera capturing a near infrared image comprising at least:
   - the laser spot corresponding to the given camera; and
   - the at least another laser spot corresponding to the at least another camera,
   - determining a pose of the given camera, respectively of the at least another camera, based at least on the near infrared image.

In addition, the present disclosure concerns a non-transitory computer readable medium comprising a computer program product recorded thereon and capable of being run by a processor, including program code instructions comprising program code instructions for implementing a method for calibrating a LF capturing system previously described.

### 4. LIST OF FIGURES

Other features and advantages of embodiments shall appear from the following description, given by way of indicative and non-exhaustive examples and from the appended drawings, of which:
- Figure 1 illustrates a LF capturing system comprising a camera array during a capture of an object according to one embodiment;
- Figures 2a and 2b illustrate one camera of the LF capturing system of figure 1 in two different configurations corresponding to two different FOV;
- Figure 3a and 3b illustrate the LF capturing system of figure 1 in two different configurations corresponding to a narrow or wide global FOV;
- Figures 4a and 4b illustrate a LF capturing system according to another embodiment when capturing an object in two different positions relative to the LF capturing system in question;
- Figure 5 illustrates a LF capturing system according to still another embodiment;
- Figure 6 illustrates a flowchart of a method for calibrating the LF capturing systems of figures 1, 4a, 4b and 5 according to one embodiment;
- Figure 7a illustrates a matrix of laser spots captured by a camera of the LF capturing system of figure 1 in a configuration where no misalignment in a physical position and/or in an optical system of the cameras of the LF capturing system exists;
- Figure 7b illustrates a matrix of laser spots captured by a camera of the LF capturing system of figure 1 in a configuration where a misalignment in a physical position and/or in an optical system of one camera of the LF capturing system exists;
- Figures 8a and 8b illustrate the possibility to distinguish between a translation and a rotation misalignment between cameras of the LF capturing system of figure 1 using two different positions of the hot mirror of the LF capturing system in question; and
- Figure 9 illustrates an exemplary device that can be used for implementing the method of figure 6.

### 5. DETAILED DESCRIPTION

In all of the figures of the present document, the same numerical reference signs designate similar elements and steps.

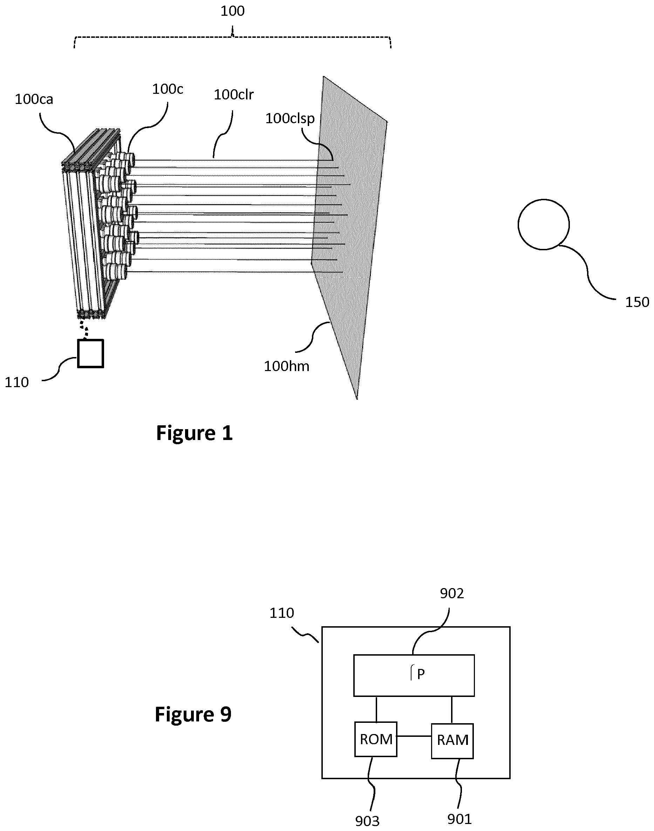

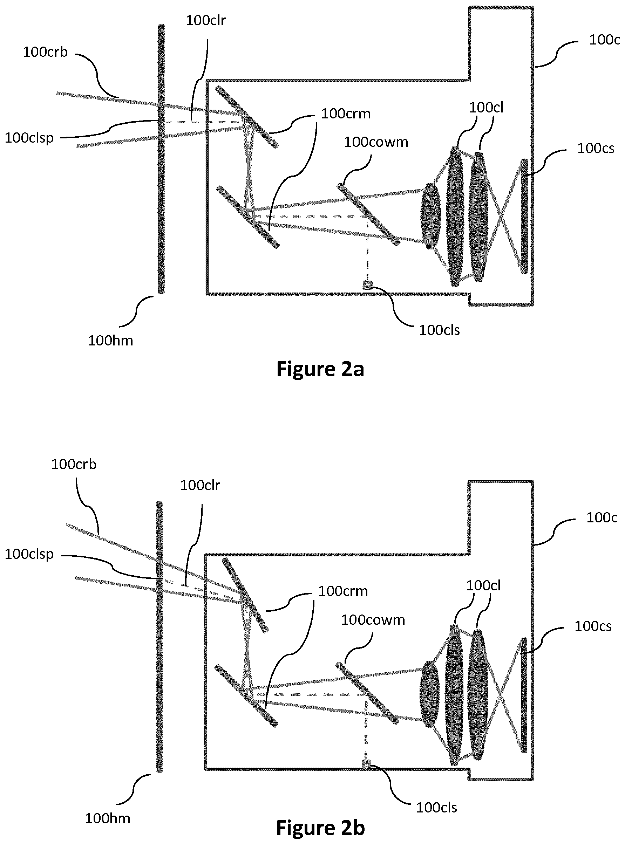

We now describe in relationship with **figure 1** a LF capturing system 100 during a capture of an object 150 according to one embodiment. A camera 100c of the LF capturing system 100 is further discussed in relationship with **figures 2a and 2b****.**

The LF capturing system 100 comprises a camera array 100ca composed of cameras 100c of the kind illustrated in figures 2a and 2b (a 4x4 matrix of sixteen cameras in this example).

More particularly, such camera 100c comprises two rotating mirrors 100crm allowing for deflecting a ray bundle 100crb captured by a sensor 100cs of the camera 100c. The ray bundle 100crb is intercepted by the sensor 100cs after going through the lenses 100cl of the optical system of the camera 100c. More particularly, the two rotating mirrors 100crm (e.g. micro-electro-mechanical systems mirrors (MEMS) or high-speed mirror galvanometers) allow to tilt and span the ray bundle 100crb captured by the camera 100c, and thus the FOV of the camera 100c at the end. For that, the two rotating mirrors 100crm are controlled by the device 110. In that case, the device 110 comprises means for controlling the rotating mirrors 100crm as further described below in relation with figure 9.

Thus, the FOV of the camera array 100ca can be adapted more flexibly than with a known camera array comprising cameras that need to be moved physically (in translation and/or rotation) in order to obtain a change in the overall FOV.

In other embodiments not illustrated, the camera 100c comprises only one rotating mirror, e.g. for controlling the ray bundle 100crb in only one dimension (e.g. horizontally or vertically).

In the embodiment illustrated in figures 2a and 2b, the camera 100c comprises a laser source 100cls in the near infrared (NIR) for having the camera 100c to radiate a laser ray 100clr as part of the ray bundle 100crb. The sensor 100cs is configured for capturing the ray bundle 100crb in the NIR domain in addition to the RGB domain (i.e. visible domain). For instance, the sensor 100cs is an RGB-D (for "Red Green Blue - Depth") sensor that allows delivering images both in the NIR domain and in the RGB domain. In other embodiments not illustrated, the camera 100c comprises different sensors for capturing images both in the NIR domain and in the RGB domain.

In the embodiment illustrated in figures 1, 2a and 2b, the LF capturing system 100 further comprises a hot mirror 100hm, i.e. a mirror that allows reflecting NIR light while allowing visible light to pass through it. The hot mirror 100hm is disposed in front of the cameras 100c so that it can intercept the laser rays 100clr radiated by the cameras 100c. Thus, the hot mirror prevents from having the object 150 to be exposed to the NIR laser rays 100clr. Conversely, the presence of the hot mirror 100hm does not degrade the capture of the object 150 in the RGB domain as such hot mirror 100hm remains transparent for visible wavelengths.

In addition, the hot mirror 100hm generates a plurality of laser spots 100clsp corresponding to the intercepted laser rays 100clr and is further configured for allowing each cameras 100c to capture in the NIR domain:
- a laser spot 100clsp corresponding to the considered camera 100c; and
- at least another laser spot 100clsp corresponding to at least another camera 100c among the cameras 100c.

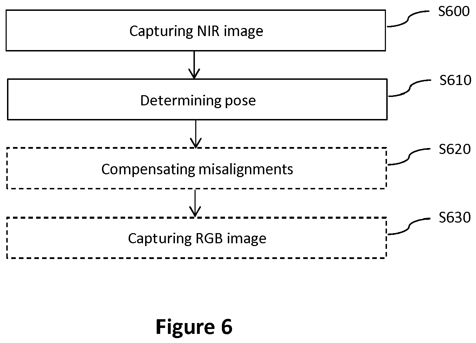

Thus, the orientation of the cameras 100c can be monitored through the capture of the laser spots 100clsp reflected by the hot mirror 100hm. This allows detecting a misalignment in a physical position and/or in an optical system of a camera 100c for a further correction of the misalignment as discussed below in relationship with the method for calibrating illustrated in figure 6. The LF capturing system 100 is thus able to deliver high quality captures whatever its FOV configuration. The more laser spots 100clsp are captured by the cameras 100c, the more reliable the estimation of the misalignment.

However, in other embodiments not illustrated, the hot mirror 100hm is configured in such a way that only at least one camera 100c can capture in the NIR domain both its own laser spot 100clsp and at least another one corresponding to another camera 100c. Indeed, based on at least one such capture, a detection in a misalignment is still possible for the camera 100c performing the capture and/or the corresponding another one as further discussed below in relation with figure 6.

In still other embodiments not illustrated, a plurality of hot mirrors 100hm are used in place of a single one. This provides flexibility in the disposal of the hot mirrors 100hm as long as the hot mirrors 100hm are configured for intercepting the laser rays 100clr radiated by the cameras 100c for generating a plurality of corresponding laser spots 100clsp on the hot mirrors 100hm, and allows one or more cameras 100c to capture at least:
- a laser spot 100clsp corresponding to the considered camera 100c; and
- at least another laser spot 100clsp corresponding to at least another camera 100c among the cameras 100c.

In the embodiment of figures 2a and 2b, the camera 100c further comprises a one-way mirror 100cowm enabling the camera 100c to radiate the laser ray 100clr generated by the laser source 100cls as part of the ray bundle 100crb while the laser ray 100clr is located outside of the ray bundle 100crb. More particularly, the laser ray 100clr is positioned precisely along the center of the camera lens 100cl principal axis so as to be in the center of the ray bundle 100crb while the laser source 100cls does not overshadow the sensor 100cs of the camera 100c. Furthermore, the laser ray 100clr remains as part of the ray bundle 100crb whatever the configuration of the rotating mirrors 100crm as it is also deflected by the rotating mirrors 100crm as is the ray bundle 100crb.

In other embodiments not illustrated, the cameras 100c of the camera array 100ca only comprise the rotating mirrors 100crm and don't comprise the laser source 100cls and the one-way mirror 100cowm. The LF capturing system 100 therefore does not comprise the hot mirror 100hm. This configuration reduces the cost of the solution while still allowing for a flexible LF capturing system 100 despite a lower quality in the captured images or video due to the lack of calibration allowed by the use of the laser rays 100clr as discussed further below in relation with figure 6.

In the embodiment illustrated in figures 1, 2a and 2b, all the cameras of the camera array 100ca are cameras 100c as discussed above. In other embodiments not illustrated, the camera array 100ca also comprises additional cameras of another kind, e.g. of a known kind for reducing the cost of the solution.

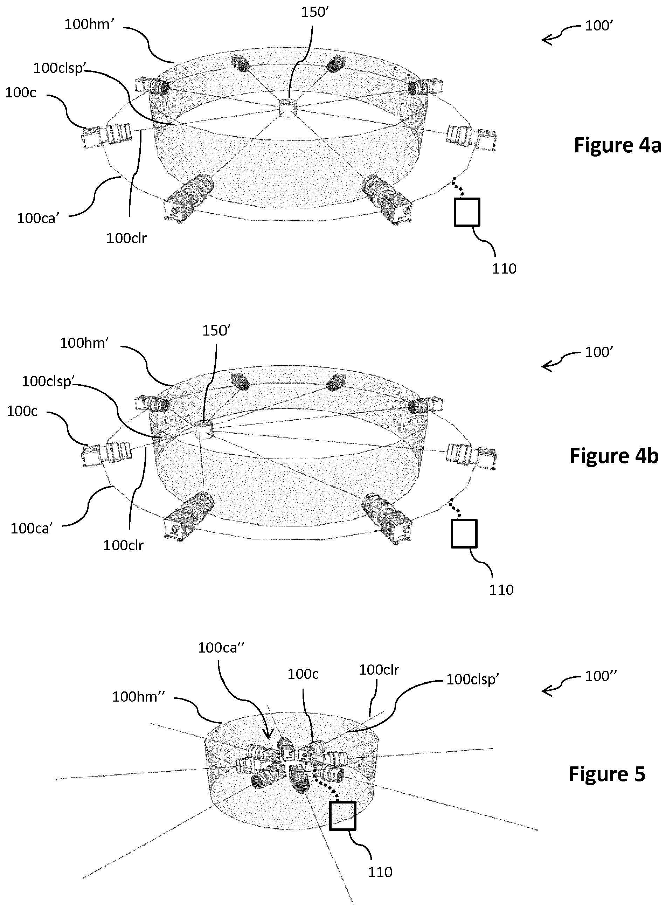

In the present embodiment, the cameras 100c are coplanar and the hot mirror 100hm is flat. However other configurations can be considered as discussed below in relation with figures 4a, 4b and 5.

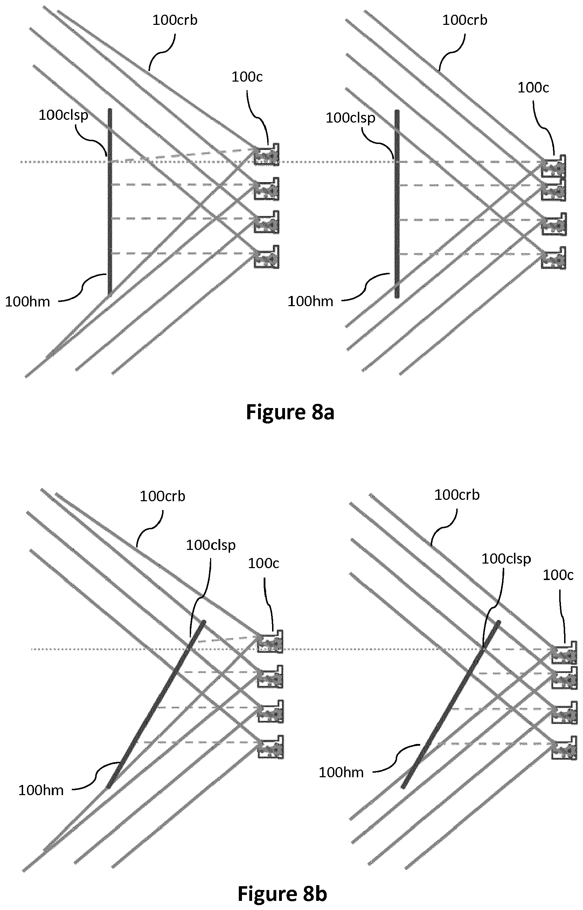

In some embodiments, the hot mirror 100hm is controlled by the device 110 and can be set at least in a first and a second position relative to the camera array 100ca. The laser rays 100clr radiated by the cameras 100c present different incident angles on the hot mirror 100hm when the hot mirror 100hm is in the first and second positions. This allows distinguishing between translations and rotations misalignments between cameras 100c of the camera array 100ca as discussed below in relation with figures 6, 8a and 8b.

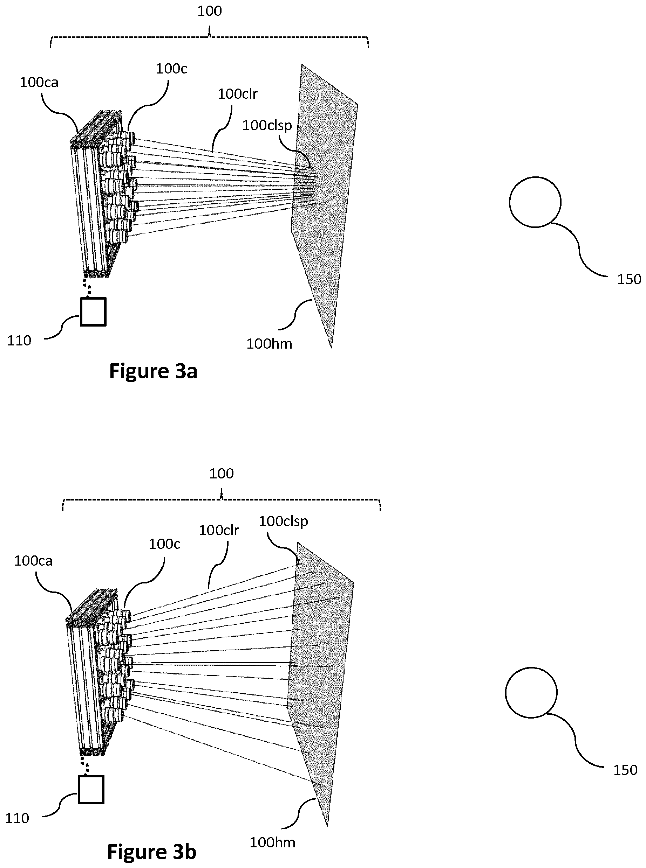

We now describe in relationship with **figures 3a and 3b** the LF capturing system 100 in two different configurations corresponding to a narrow or wide global FOV obtained for the LF capturing system 100.

The LF capturing system 100 allows new possibilities of capture due to its flexibility.

Indeed, some applications require the highest overlapping achievable between views at a given depth or all along the optical axis, in order to reach the highest sampling density achievable. This provides the most accurate 3D reconstruction. Some other applications, e.g. related to virtual reality, require the views to spread over a wide angle in order to provide an immersive content. Last some professional applications require camera setups that are twofold: on the one hand cameras that look at a scene of interest and acquire the content to be post-produced, and on the other hand, cameras that point upward or onside, dedicated to capture markers located on the set, in order to ease on-the-flow or post-capture calibration.

For instance, the device 110 is further configured for making the two rotating mirrors 100crm of each camera 100c to switch alternatively between a first and a second configuration from frame to frame during a capture of the object 150. The first position deflects the ray bundle 100crb for having the LF capturing system 100 to achieve a first FOV (figure 3a) and the second position deflects the ray bundle 100crb for having the LF capturing system 100 to achieve a second FOV (figure 3b) higher than the first FOV.

In that case, the images reconstructed using both the frames captured using the first and second FOVs exhibits:
- a high level of quality for the area of the images that corresponds to the first FOV and that has thus been captured by both the first and second FOVs (i.e. the area of the images that have been commonly captured when the rotating mirrors 100crm of each camera 100c are in the first and in the second position); and
- an overall high FOV thanks to the use of the second FOV (despite a lower quality in the area corresponding to the second FOV that has not been captured using the first FOV).

Furthermore, such method of capture can be considered whatever the shape of the LF capturing system according to the disclosure, e.g. with the LF capturing system 100' of figures 4a and 4b or with the LF capturing system 100" of figure 5.

We now describe in relationship with **figures 4a and 4b** a LF capturing system 100' according to another embodiment when capturing an object 150' in two different positions relative to the LF capturing system 100'.

Contrary to the LF capturing system 100 of figure 1, the LF capturing system 100' comprises a fully convergent camera array 100ca' and a hot mirror 100hm' that reflects the NIR laser rays 100Ir (In other embodiments not illustrated, a plurality of hot mirrors 100hm' are used in place of a single one as discussed above in relation with figure 1). In the present embodiment, the hot mirror 100hm' is an inner circle that is located between the cameras 100c and the object 150'. The hot mirror 100hm' is configured for intercepting the laser rays 100clr radiated by the cameras 100c for generating a plurality of corresponding laser spots 100clsp' on the hot mirror 100hm', and allows one or more camera 100c to capture at least:
- a laser spot 100clsp' corresponding to the considered camera 100c; and
- at least another laser spot 100clsp' corresponding to at least another camera 100c among the cameras 100c.

Such fully convergent camera array 100ca' is commonly used to record and scan one scene from all angles, here the object 150'. But even if the camera array is correctly sized to surround the object 150', it might be difficult to keep the object 150' in the center of the camera array 100ca' all along a capture in particular when the object 150' is moving. Under such circumstances, the LF capturing system 100' reveals its potential as it enables the cameras 100c to better follow the object 150' during a capture.

For that, the device 110 is further configured for:
- making the cameras 100c capturing a LF video of the object 150' in the visible domain when the cameras 100c is in a neutral position (e.g. when the rotating mirrors 100crm of the camera 100c deflect the ray bundles 100crb in a predetermined direction. This can be typically in front of the corresponding camera 100c as illustrated in figure 4a), delivering a matrix of images;
- computing a depth map associated to the object 150' based at least on the matrix of images (enforcing a known technic like e.g. a matching technic); and
- making the cameras 100c deflecting their ray bundles 100crb toward an area of interest in the scene, e.g. an area corresponding to lower depths in the depth map.

In variants, the acts of computing a depth map and of making the cameras 100c deflecting their ray bundles 100crb are repeated regularly to follow the area of interest during the capture. Thus, the LF capturing system 100' allows tracking easily the object 150' when moving in the scene. As a result, scene details close to the cameras 100c can benefit from a larger overlap while the scene background might not need an important overlapping.

Such method for tracking an object during a capture can be considered whatever the shape of the LF capturing system according to the disclosure, e.g. with the LF capturing system 100 of figure 1 or with the LF capturing system 100" of figure 5.

We now describe in relationship with **figure 5** a LF capturing system 100" according to still another embodiment.

On the opposite of the LF capturing system 100' of figures 4a and 4b, the LF capturing system 100" comprises a fully divergent camera array 100ca". The hot mirror 100hm" that reflects the NIR laser rays 100Ir is an external circle that encompass the camera array 100ca" (In other embodiments not illustrated, a plurality of hot mirrors 100hm" are used in place of a single one as discussed above in relation with figure 1).

In the present embodiment, the hot mirror 100hm" is configured for intercepting the laser rays 100clr radiated by the cameras 100c for generating a plurality of corresponding laser spots 100clsp" on the hot mirror 100hm", and allows one or more cameras 100c to capture at least:
- a laser spot 100clsp" corresponding to the considered camera 100c; and
- at least another laser spot 100clsp" corresponding to at least another camera 100c among the cameras 100c.

One interest of fully divergent camera arrays (also known as 360 degrees camera mount) like the camera array 100ca' is to generate virtual reality contents. To be able to stitch correctly all the images from the different cameras, cameras must have a reasonable overlap from one camera to another. For instance, the overlapping between camera array images might be used to:
- Stich the images together without artifacts;
- Compute a depth map; or
- Increase the resolution.

In that perspective, the LF capturing system 100" reveals its potential for instance when enforcing the tracking method disclosed above in relation with figures 4a and 4b. Indeed, making the cameras 100c deflecting their FOV toward areas of interest close to the camera array 100ca" results in that the areas of interest close to the cameras 100c benefit from a larger overlap while the scene background might not need an important overlapping.

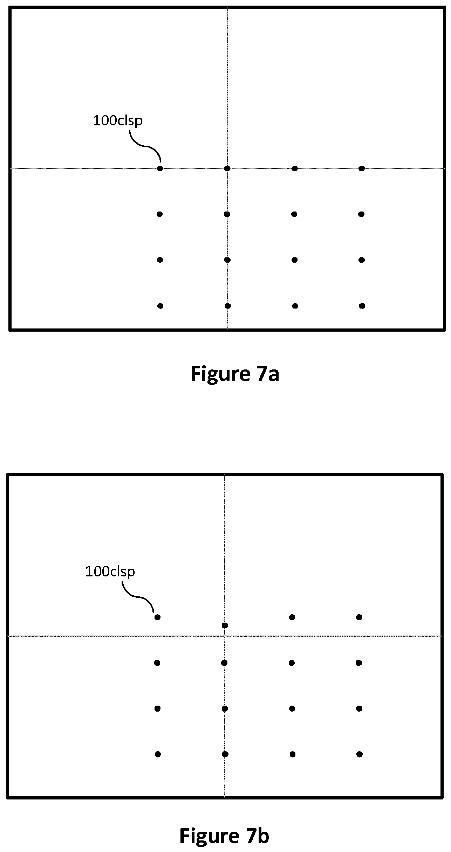

We now describe in relationship with **figure 6** the steps of a method for calibrating the LF capturing systems 100, 100' and 100" according to at least one embodiment. The processing associated to those steps are illustrated through examples discussed in relation with **figures 7a, 7b** **and** **8a, 8b.**

For enforcing the method for calibrating according to the disclosure, the LF capturing systems 100 (or 100' or 100") comprise both the hot mirror 100hm (or 100hm' or 100hm") and cameras 100c comprising the laser source 100cls on top of the rotating mirrors 100crm.

In a **step S600,** the device 110 makes each camera 100c capturing in the NIR domain at least:
- the laser spot 100clsp (or 100clsp' or 100clsp") of the considered camera 100c; and
- at least another laser spot 100clsp (or 100clsp' or 100clsp") corresponding to at least another camera 100c,
delivering a set of corresponding NIR images.

In a **step S610,** the device 110 determines a pose (e.g. a physical position of the camera 100c in question relative to the camera array 100ca (or 100ca' or 100ca") and/or a physical position of the sensor 100cs relative to the camera 100c optical system and/or a physical position of the lenses 100cl relative to the main axis of the optical system of the camera 100c) of the considered camera 100c and/or of the at least another camera 100c, based at least on the set of NIR images.

In other embodiments (e.g. when not all the cameras 100c capture in the NIR domain both their own laser spot 100clsp and at least another one corresponding to another camera 100c as discussed above in relation with figure 1), in step S600 the device 110 makes only at least one camera 100c capturing in the NIR domain at least its laser spot 100clsp (or 100clsp' or 100clsp") and at least another laser spot 100clsp (or 100clsp' or 100clsp") corresponding to at least another camera 100c, delivering one or more corresponding NIR images. In that case, in step S610 the device 110 determines a pose of the at least one camera 100c and/or of the at least another camera 100c based at least on the one or more camera 100c.

As an illustrative example, reconsidering the configuration of the LF capturing systems 100 of figure 1, figures 7a and 7b show the NIR patterns of the laser spots 100clsp (or 100clsp' or 100clsp") as captured by the second camera 100c (starting from the top-left corner) respectively when the LF capturing system 100 is calibrated and when a lens 100cl is incorrectly mounted on the camera 100c (resulting in a NIR image that would be shifted e.g. by 10 or 20 pixels). The incorrectly mounted lens 100cl is emphasized by the laser spot of the corresponding camera: the spot is no more exactly in the center of the camera lens principal axis (figure 7b). If the camera itself is globally shifted from its original position in the camera array, the corresponding laser spot would be shifted.

Back to figure 6, a pose of the cameras is thus derived from the capture of the laser spots 100clsp (or 100clsp' or 100clsp") reflected by the hot mirror, whatever the configuration of the rotating mirrors 100crm of the cameras 100c (i.e. whatever the FOV obtained for the LF capturing system 100 (or 100' or 100")).

In a **step S620,** the device 110 makes the camera 100c for which a pose has been determined in step S610 to compensate for a misalignment in a physical position and/or in an optical system of the considered camera 100c when the pose is representative that the misalignment is greater than a predetermined threshold.

Thus, the misalignment is corrected directly in the considered camera 100c, e.g. by applying a correction offset on the rotating mirrors 100crm for correcting the FOV of the considered camera 100c. When such physical compensation is performed before a capture of a scene, this allows for a better quality in the capture in question.

In the illustrated embodiment, the steps S600 and S610 are enforced at least over a predetermined time period, enabling delivering the pose as a function of time. Thus, the drifts in the parameters to compensate (e.g. a misalignment in a physical position and/or in an optical system of the cameras) can be both tracked in time and/or better estimated through a time averaging for reducing the noise. In that case, in some embodiments the step S620 is enforced periodically, or at least from time to time to update the compensation for the misalignment.

In other embodiments, the steps S600 and S610 are enforced only once, e.g. before the capturing of the LF video, in order to calibrate the LF capturing system 100.

Back to figure 6, in a **step S630,** the device 110 makes the camera 100c to capture a LF video of a scene in the RGB domain at least over the predetermined time period.

This is indeed an advantage of the LF capturing system 100 (or 100' or 100") to allow for an estimation of the pose of the cameras 100c at the same time a LF video is captured in the RGB domain.

In the illustrated embodiment, the misalignment can thus be compensated both when necessary during the capture of the LF video as discussed above, and/or in post-processing (e.g. for compensating the remaining drifts in between the compensation points applied during the capture).

In other embodiments not illustrated, the step S620 is not enforced and only a compensation in post-processing is performed.

In some embodiments, the hot mirror 100hm (or 100hn' or 100hn") is controlled by the device 110 and can be set at least in a first and a second position relative to the camera array 100ca (or 100ca' or 100ca"). The laser rays 100clr radiated by the cameras 100c present different incident angles on the hot mirror 100hm (or 100hn' or 100hn") when the hot mirror 100hm (or 100hn' or 100hn") is in the first and second positions as discussed above in relation with figure 1 in the case of the LF capturing system 100.

In that case, in some embodiments the step S600 is enforced at least twice when the hot mirror 100hm (or 100hn' or 100hn") is in the first and second positions delivering corresponding first and second NIR images. The determination of the pose in step S610 is then based at least on the first and second NIR images.

This allows distinguishing between translations and rotations misalignments between cameras 100c as illustrated in figures 8a and 8b in the case where the LF capturing system is the LF capturing system 100 of figure 1.

More particularly, figures 8a illustrates the hot mirror 100hm in the first position. It can be seen that the laser spot 100clsp of camera 100c remains the same when there is a rotation misalignment (figure 8a left) and a translation misalignment (figure 8a right).

However, when the hot mirror 100hm is in the second position as illustrated in figure 8b, the laser spot 100clsp of camera 100c is now in a different location on the hot mirror 100hm when there is a rotation misalignment of camera 100c (figure 8b left) than when there is a translation misalignment of camera 100c (figure 8b right).

This allows distinguishing between translations and rotations misalignments between cameras 100c of the camera array 100ca.

**Figure 9** illustrates the structural blocks of a particular embodiment of the device 110 (see figures 1, 3a, 3b, 4a, 4b and 5) that can be used for calibrating a LF capturing system according to the disclosure (according to any of the embodiments disclosed above).

In this embodiment, the device 110 for implementing the disclosed method comprises a non-volatile memory 903 (e.g. a read-only memory (ROM) or a hard disk), a volatile memory 901 (e.g. a random-access memory or RAM) and a processor 902. The non-volatile memory 903 is a non-transitory computer-readable carrier medium. It stores executable program code instructions, which are executed by the processor 902 in order to enable implementation of the method described above (method for calibrating a LF capturing system according to the disclosure) in its various embodiment disclosed above in relationship with figure 6.

Upon initialization, the aforementioned program code instructions are transferred from the non-volatile memory 903 to the volatile memory 901 so as to be executed by the processor 902. The volatile memory 901 likewise includes registers for storing the variables and parameters required for this execution.

All the steps of the above method calibrating a LF capturing system according to the disclosure may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

More generally, the device 110 can also be configured for controlling the parts of the LF capturing system according to the disclosure (according to any of the embodiments disclosed above) as e.g. the rotating mirrors 100crm of each camera 100c.

For instance, the device 110 can be configured for making the rotating mirrors 100crm of each camera 100c switching alternatively between a first and a second configuration from frame to frame during a capture of a LF video in the visible domain as disclosed above in relationship with figures 3a and 3b.

In the same way, the device 110 can be configured for making the camera 100c capturing a LF video of a given scene in the visible domain when the cameras 100c are in a neutral position, delivering a matrix of images; computing a depth map associated to the given scene based at least on the matrix of images; and making the camera 100c deflecting the ray bundles 100crb of the cameras 100c toward an area of the given scene corresponding to lower depths in the depth map as disclosed above in relationship with figures 4a and 4b.

The device 110 can also be configured for controlling the hot mirror 100hm (or 100hm' or 100hm") for switching between a first and a second position relative to the camera array 100ca (or 100ca' or 100ca"). The laser rays 100clr radiated by the cameras 100c present different incident angles on the hot mirror 100hm (or 100hm' or 100hm") when the hot mirror 100hm (or 100hm' or 100hm") is in the first and second positions. This allows distinguishing between translations and rotations misalignments between cameras 100c of the array of cameras 100ca as discussed above in relation with figures 6, 8a and 8b.

According to one embodiment, a LF capturing system comprising a camera array is proposed. A plurality of cameras of the camera array comprise each at least one rotating mirror allowing for deflecting a ray bundle captured by at least one sensor of the camera.

Thus, the present disclosure proposes a new and inventive solution for improving the flexibility of a LF capturing system comprising a camera array (or camera rig), e.g. in terms of the agility for modifying the FOV of the camera array in question.

For that, the disclosed technic proposes to use cameras comprising one or more rotating mirror(s) (e.g. micro-electro-mechanical systems mirrors (MEMS) or high-speed mirror galvanometers) allowing to tilt and/or span the ray bundle captured by the camera in question (and thus, the FOV of the camera at the end). The FOV of the camera array can thus be adapted more flexibly than with known camera arrays that need to be moved physically altogether (in translation and/or rotation) in order to obtain a change in the overall FOV.

According to one embodiment, each camera of the plurality of cameras further comprises a laser source in the near infrared configured for having the camera to radiate a laser ray as part of the ray bundle. The at least one sensor is configured for capturing the ray bundle at least in the near infrared domain. The LF capturing system further comprises at least one hot mirror disposed in front of the plurality of cameras and configured for:
- intercepting the laser rays radiated by the cameras of the plurality of cameras, generating a plurality of corresponding laser spots on the at least one hot mirror; and
- allowing at least one given camera of the plurality of cameras to capture in the near infrared domain at least:
   - a laser spot corresponding to the given camera; and
   - at least another laser spot corresponding to at least another camera of the plurality of cameras.

Thus, the orientation of the cameras can be monitored through the capture of the laser spots reflected by the hot mirror. This allows detecting a misalignment in a physical position and/or in an optical system of a camera of the array for e.g. a further correction of the misalignment. The LF capturing system according to the disclosure is thus able to deliver high quality captures whatever its FOV configuration.

Furthermore, the hot mirror intercepts the near infrared laser and thus prevents from having the object and/or persons in the scene being captured by the LF capturing system to be exposed to the near infrared laser rays. Conversely, the presence of the hot mirror does not degrade the capture of the scene in the RGB domain as such hot mirror remains transparent for visible wavelengths.

According to one embodiment, the at least one hot mirror is configured for allowing each camera of the plurality of cameras to capture in the near infrared domain:
- a laser spot corresponding to the camera; and
- at least another laser spot corresponding to at least another camera of the plurality of cameras.

According to one embodiment, each camera of the plurality of cameras further comprises a one-way mirror enabling the camera to radiate the laser ray as part of the ray bundle while the laser source is located outside of the ray bundle.

For instance, the laser ray can be positioned precisely along the center of the camera lens principal axis so as to be in the center of the ray bundle intercepted by the sensor of the camera while the laser source does not overshadow the sensor of the camera.

Furthermore, the laser ray remains as part of the ray bundle whatever the configuration of the rotating mirror(s) as it is also deflected by the rotating mirror(s) as is the ray bundle in question.

According to one embodiment, the at least one sensor is a single RGB-D (for "Red Green Blue - Depth") sensor.

According to one embodiment, the plurality of cameras are coplanar. The at least one hot mirror is flat and further configured to be used at least in a first and a second position relative to the plurality of cameras. The laser rays radiated by the cameras of the plurality of cameras presenting different incident angles on the at least one hot mirror when the at least one hot mirror is in the first and second positions.

Thus, it can be distinguished between translations and rotations misalignments between cameras of the array of cameras.

According to one embodiment, the LF capturing system comprises a reprogrammable or dedicated computation machine configured for making the at least one rotating mirror of each camera of the plurality of camera switching alternatively between a first and a second configuration from frame to frame during a given capture of a LF video in the visible domain. The first position deflects the ray bundle for achieving a first FOV and the second position deflects the ray bundle for achieving a second FOV higher than the first FOV.

According to one embodiment, the LF capturing system comprises a reprogrammable or dedicated computation machine configured for:
- making at least the plurality of camera capturing a LF video of a given scene in the visible domain when each camera of the plurality of cameras is in a neutral position, delivering a matrix of images;
- computing a depth map associated to the given scene based at least on the matrix of images; and
- making the plurality of camera deflecting the ray bundles of the cameras of the plurality of cameras toward an area of the given scene corresponding to lower depths in the depth map.

Thus, the LF capturing system according to the disclosure allows tracking easily objects of interest in a scene.

According to one embodiment, a method for calibrating a LF capturing system comprising a camera array is proposed. A plurality of cameras of the camera array comprise each at least one rotating mirror allowing for deflecting a ray bundle captured by at least one sensor of the camera. Each camera of the plurality of cameras further comprises a laser source in the near infrared configured for having the camera to radiate a laser ray as part of the ray bundle. The at least one sensor is configured for capturing the ray bundle at least in the near infrared domain. The LF capturing system further comprises at least one hot mirror disposed in front of the plurality of cameras and configured for:
- intercepting the laser rays radiated by the cameras of the plurality of cameras, generating a plurality of corresponding laser spots on the at least one hot mirror; and
- allowing at least one given camera of the plurality of cameras to capture in the near infrared domain at least:
   - a laser spot corresponding to the given camera; and
   - at least another laser spot corresponding to at least another camera of the plurality of cameras.

Such method comprises:
- making at least the given camera capturing a near infrared image comprising at least:
   - the laser spot corresponding to the given camera; and
   - the at least another laser spot corresponding to the at least another camera,
- determining a pose of the given camera, respectively of the at least another camera, based at least on the near infrared image.

Thus, a pose of the cameras can be easily derived from the capture of the laser spots reflected by the hot mirror, whatever the configuration of the rotating mirror(s) of each camera of the camera array of the LF capturing system (i.e. whatever the FOV obtained for the LF capturing system).

According to one embodiment, a device for calibrating a LF capturing system comprising a camera array is proposed. A plurality of cameras of the camera array comprise each at least one rotating mirror allowing for deflecting a ray bundle captured by at least one sensor of the camera. Each camera of the plurality of cameras further comprises a laser source in the near infrared configured for having the camera to radiate a laser ray as part of the ray bundle. The at least one sensor is configured for capturing the ray bundle at least in the near infrared domain. The LF capturing system further comprises at least one hot mirror disposed in front of the plurality of cameras and configured for:
- intercepting the laser rays radiated by the cameras of the plurality of cameras, generating a plurality of corresponding laser spots on the at least one hot mirror; and
- allowing at least one given camera of the plurality of cameras to capture in the near infrared domain at least:
   - a laser spot corresponding to the given camera; and
   - at least another laser spot corresponding to at least another camera of the plurality of cameras.

Such device comprises a reprogrammable or dedicated computation machine configured for:
- making at least the given camera capturing a near infrared image comprising at least:
   - the laser spot corresponding to the given camera; and
   - the at least another laser spot corresponding to the at least another camera,
   - determining a pose of the given camera, respectively of the at least another camera, based at least on the near infrared image.

According to one embodiment, the capturing a near infrared image is enforced for each camera of the plurality of cameras delivering a set of corresponding near infrared images. The pose of the given camera is determined as a function of the set of near infrared images.

According to one embodiment, the capturing a near infrared image and the determining the pose are enforced at least over a predetermined time period, enabling delivering the pose as a function of time.

Thus, the drifts in the parameters to compensate (e.g. a misalignment in a physical position and/or in an optical system of the cameras) can be both tracked in time and/or better estimated through a time averaging for reducing the noise.

According to one embodiment, the method for calibrating a LF capturing system further comprises, or the device for calibrating a LF capturing system is further configured for making the given camera, respectively the at least another camera, compensating for a misalignment in a physical position and/or in an optical system of the given camera, respectively the at least another camera, associated to the pose when the pose is representative that the misalignment is greater than a predetermined threshold.

Thus, the misalignment in a physical position and/or in an optical system of the camera in question is corrected directly in the camera, e.g. by applying a correction offset on the rotating mirror(s) for correcting the FOV of the camera in question. When such physical compensation is performed before a capture of a scene, this allows for a better quality in the capture in question.

According to one embodiment, the method for calibrating a LF capturing system further comprises, or the device for calibrating a LF capturing system is further configured for making at least the plurality of camera capturing a LF video of a scene in the visible domain at least over the predetermined time period.

Thus, the misalignment in a physical position and/or in an optical system of the cameras is taken into account for correcting the captured LF video, e.g. in post-processing.

According to one embodiment, the capturing a near infrared image is enforced at least twice when the at least one hot mirror is in the first and second positions delivering corresponding first and second near infrared images, the pose being based at least on the first and second near infrared images.

Thus, it can be distinguished between translations and rotations misalignments between cameras of the array of cameras.

According to one embodiment, a non-transitory computer readable medium comprising a computer program product recorded thereon and capable of being run by a processor, including program code instructions comprising program code instructions for implementing a method for calibrating a LF capturing system previously described is proposed.

## Claims

1. Light field capturing system comprising a camera array,
**characterized in that** a plurality of cameras of said camera array comprise each at least one rotating mirror allowing for deflecting a ray bundle captured by at least one sensor of said camera.

2. Light field capturing system according to claim 1,
wherein each camera of the plurality of cameras further comprises a laser source in the near infrared configured for having said camera to radiate a laser ray as part of said ray bundle,
wherein said at least one sensor is configured for capturing said ray bundle at least in the near infrared domain,
and wherein said light field capturing system further comprises at least one hot mirror disposed in front of said plurality of cameras and configured for:
- intercepting the laser rays radiated by the cameras of the plurality of cameras, generating a plurality of corresponding laser spots on said at least one hot mirror; and
- allowing at least one given camera of said plurality of cameras to capture in the near infrared domain at least:
- a laser spot corresponding to said given camera; and
- at least another laser spot corresponding to at least another camera of said plurality of cameras.

3. Light field capturing system according to claim 2,
wherein each camera of the plurality of cameras further comprises a one-way mirror enabling said camera to radiate said laser ray as part of said ray bundle while said laser source is located outside of said ray bundle.

4. Light field capturing system according to claim 2 or 3 wherein said at least one sensor is a single RGB-D (for "Red Green Blue - Depth") sensor.

5. Light field capturing system according to any of the claims 2 to 4
wherein said plurality of cameras are coplanar,
and wherein said at least one hot mirror is flat and further configured to be used at least in a first and a second position relative to said plurality of cameras,
the laser rays radiated by the cameras of the plurality of cameras presenting different incident angles on said at least one hot mirror when said at least one hot mirror is in said first and second positions.

6. Light field capturing system according to any of the claims 1 to 5 further comprising a reprogrammable or dedicated computation machine configured for making the at least one rotating mirror of each camera of said plurality of camera switching alternatively between a first and a second configuration from frame to frame during a given capture of a light field video in the visible domain,
said first position deflecting said ray bundle for achieving a first FOV and said second position deflecting said ray bundle for achieving a second FOV higher than said first FOV.

7. Light field capturing system according to any of the claims 1 to 5 further comprising a reprogrammable or dedicated computation machine configured for:
- making at least said plurality of camera capturing a light field video of a given scene in the visible domain when each camera of said plurality of cameras is in a neutral position, delivering a matrix of images;
- computing a depth map associated to said given scene based at least on said matrix of images; and
- making said plurality of camera deflecting the ray bundles of the cameras of said plurality of cameras toward an area of said given scene corresponding to lower depths in said depth map.

8. Method for calibrating a light field capturing system according to any of the claims 2 to 7,
**characterized in that** it comprises:
- making at least said given camera **capturing** a near infrared image comprising at least:
- said laser spot corresponding to said given camera; and
- said at least another laser spot corresponding to said at least another camera,
- **determining** a pose of said given camera, respectively of said at least another camera, based at least on said near infrared image.

9. Device for calibrating a light field capturing system according to any of the claims 2 to 7, said device comprising a reprogrammable or dedicated computation machine configured for:
- making at least said given camera capturing a near infrared image comprising at least:
- said laser spot corresponding to said given camera; and
- said at least another laser spot corresponding to said at least another camera,
- determining a pose of said given camera, respectively of said at least another camera, based at least on said near infrared image.

10. Method according to claim 8 or device according to claim 9,
wherein said **capturing** a near infrared image and said **determining** said pose are enforced at least over a predetermined time period, enabling delivering said pose as a function of time.

11. Method according to claim 8 or 10 further comprising, or device according to claim 9 or 10 further configured for:
- making said given camera, respectively said at least another camera, **compensating** for a misalignment in a physical position and/or in an optical system of said given camera, respectively said at least another camera, associated to said pose when said pose is representative that said misalignment is greater than a predetermined threshold.

12. Method according to claim 10 or 11 in that it depends on 10 further comprising, or device according to claim 10 or 11 in that it depends on 10 further configured for, making at least said plurality of camera **capturing** a light field video of a scene in the visible domain at least over said predetermined time period.

13. Method according to any of the claims 8 or 10 to 11 or device according to any of the claims 9 to 11,
wherein said light field capturing system depends on claim 5,
and wherein said **capturing** a near infrared image is enforced at least twice when said at least one hot mirror is in said first and second positions delivering corresponding first and second near infrared images, said pose being based at least on said first and second near infrared images.

14. Computer program product **characterized in that** it comprises program code instructions for implementing a method according to at least one of the claims 8 or 9 to 13, when said program is executed on a computer or a processor.

15. A non-transitory computer-readable carrier medium storing a computer program product according to claim 14.
